# EUROPÄISCHE PATENTSCHRIFT

(11) **EP 3 529 510 B1**
(45) Veröffentlichungstag und Bekanntmachung des Hinweises auf die Patenterteilung: **22.07.2020**
(21) Anmeldenummer: 17781112.2
(22) Anmeldetag: 09.10.2017
(51) Int. Cl.: F16D 3/60, F16D 3/78

(54) **FADENPAKETABSTÜTZUNGSVORRICHTUNG, ELASTISCHE GELENKSCHEIBE SOWIE EIN VERFAHREN ZUR HERSTELLUNG EINER ELASTISCHEN GELENKSCHEIBE**
THREAD PACKAGE SUPPORTING DEVICE, ELASTIC JOINT DISC, AND METHOD FOR PRODUCING AN ELASTIC JOINT DISC
DISPOSITIF DE SUPPORT DE FAISCEAU DE FILS DE JOINT ÉLASTIQUE À DÉFORMATION AINSI QUE PROCÉDÉ POUR FABRIQUER UN JOINT ÉLASTIQUE À DÉFORMATION

(30) Priorität: 24.10.2016 DE 102016120252
(43) Veröffentlichungstag der Anmeldung: 28.08.2019
(73) Patentinhaber: Vibracoustic GmbH, 64293 Darmstadt (DE)
(72) Erfinder: HOFHANSL, Frank, 79424 Auggen (DE); MUELLER, Niklas, 79241 Ihringen (DE)
(74) Vertreter: Patentanwälte Olbricht Buchhold Keulertz
(86) Internationale Anmeldenummer: PCT/EP2017/075708
(87) Internationale Veröffentlichungsnummer: WO 2018/077606

(56) Entgegenhaltungen:
- EP-A2- 2 623 812
- WO-A1-2005/059391
- DE-A1-102012 001 139
- DE-B3-102005 031 641
- DE-U1-202011 108 594
- FR-A1- 2 313 595

## Beschreibung

Die vorliegende Erfindung betrifft eine Fadenpaketabstützungsvorrichtung zum Abstützen eines mit einem Faden gewickelten Fadenpakets für eine elastische Gelenkscheibe zum Verbinden zweier Wellenabschnitte, wobei das Fadenpaket zwei gegenüberliegende bogenförmige Fadenbereiche und zwei die bogenförmigen Fadenbereiche miteinander verbindende und parallel verlaufende tangentiale Fadenbereiche aufweist. Ferner betrifft die Erfindung eine elastische Gelenkscheibe zum Verbinden zweier Wellenabschnitte sowie Verfahren zum Herstellen einer elastischen Gelenkscheibe zum Verbinden zweier Wellenabschnitte.

Eine elastische Gelenkscheibe der eingangs genannten Art, die auch als elastische Torsionskupplung, NRG-Disc® oder Hardyscheibe bezeichnet werden kann, wird zum Verbinden zweier Wellenabschnitte einer Gelenkwelle, insbesondere einer Kardanwelle verwendet. Die Gelenkscheibe gleicht leichte Versetzungen der beiden Wellen aus und dämpft gleichzeitig Drehmomentstöße, die aus einer Drehzahländerung der Gelenkwelle oder dem Anlauf der Gelenkwelle resultieren.

Eine herkömmliche elastische Gelenkscheibe umfasst eine Vielzahl an Buchsen, Schlingen- oder Fadenpaketen und einen elastomeren Körper, in dem die Buchsen und Fadenpakete zumindest teilweise eingebettet sind. Über die Buchsen wird die Gelenkscheibe an die Wellenabschnitte der Gelenkwelle angebunden.

Zur Herstellung einer Gelenkscheibe werden zwei Buchsen benachbart zueinander positioniert und mit einem Faden umschlungen. Die dabei gebildeten Fadenpakete samt Buchsen können dann entweder insgesamt in einen elastischen Körper eingebettet werden, oder jedes der Fadenpakete samt Buchse wird von einem elastischen Körper ummantelt, und anschließend werden die ummantelten Fadenpakete miteinander verbunden.

So offenbart DE 10 2008 047 596 A1 eine elastische Gelenkscheibe umfassend eine Mehrzahl von Buchsen, eine Mehrzahl von Schlingenpaketen, wobei jedes Schlingenpaket jeweils zwei benachbarte Buchsen umschlingt und jede Buchse von wenigstens zwei Schlingenpaketen umschlungen wird, eine zur axialen Führung der Mehrzahl der Schlingenpakete auf den Buchsen angeordnete Stützeinrichtung und eine gummielastische Ummantelung, in die die Schlingenpakete, die Stützeinrichtungen und die Buchsen zumindest teilweise eingebettet sind.

Ferner geht aus DE 10 2011 121 472 A1 eine elastische Gelenkscheibe hervor, die aus einer Mehrzahl an Inlays gebildet ist, wobei jedes Inlay mindestens zwei rohrförmige Buchsen, mindestens ein oval geformtes, um die Buchsen umschlungenes Fadenpaket und mindestens einen elastomeren Körper, in den das Inlay eingebettet ist, aufweist. Die Inlays werden dann zu einer Gelenkscheibe verbunden.

Ferner gehen aus DE 10 2012 001 139A1, FR 2 313 591 A1, DE 20 2011 108 594 U1, DE 10 2005 031 641 B3, EP 2 623 812 A2 und WO 2005/059391 A1 elastische Gelenkscheiben hervor, die von einem Fadenpaket umschlungene Metallhülsen aufweisen. Die Metallhülsen sowie das Fadenpaket sind in einen Elastomerkörper eingebettet. Der vorliegenden Erfindung liegt die Aufgabe zugrunde, eine Fadenpaketabstützungsvorrichtung, eine elastische Gelenkscheibe sowie ein Verfahren zur Herstellung einer elastische Gelenkscheibe zu schaffen, die eine einfachere und damit kostengünstigere Herstellung sowie eine durchgehende Fadenstabilisierung ermöglichen.

Zur Lösung der Aufgabe wird eine Fadenpaketabstützungsvorrichtung mit den Merkmalen nach Anspruch 1, eine elastische Gelenkscheibe mit den Merkmalen nach Anspruch 10 sowie ein Verfahren zur Herstellung einer elastischen Gelenkscheibe mit den Merkmalen nach Anspruch 11 oder 12 vorgeschlagen.

Vorteilhafte Ausgestaltungen der Fadenpaketabstützungsvorrichtung sowie der Verfahren zur Herstellung einer elastischen Gelenkscheibe sind Gegenstand der jeweiligen abhängigen Ansprüche.

Gemäß einem Aspekt wird eine Fadenpaketabstützungsvorrichtung zum Abstützen eines mit einem Faden gewickelten Fadenpakets für eine elastische Gelenkscheibe zum Verbinden zweier Wellenabschnitte vorgeschlagen, wobei das Fadenpaket zwei gegenüberliegende bogenförmige Fadenbereiche und zwei die bogenförmigen Fadenbereiche miteinander verbindende und parallel verlaufende tangentiale Fadenbereiche aufweist. Die Fadenpaketabstützungsvorrichtung weist einen ersten Umlenkabschnitt und einen zweiten Umlenkabschnitt auf, um die jeweils ein bogenförmiger Fadenbereich des Fadenpakets geführt ist, wobei die beiden Umlenkabschnitte über einen Steg einstückig miteinander verbunden sind. Die Umlenkabschnitte und der Steg sind einstückig im Spritzgussverfahren hergestellt.

Durch die Einstückigkeit beziehungsweise Einteiligkeit ist die Fadenpaketabstützungsvorrichtung formstabil. Dadurch bleibt der Faden beim Aufwickeln auf die Fadenpaketabstützungsvorrichtung stets vorgespannt. Somit entfällt ein andauerndes Spannen und Entspannen des Fadens beziehungsweise des Fadenpakets bei weiteren Prozessschritten. Darüber hinaus ist es durch die Einteiligkeit möglich, direkt auf die Fadenpaketabstützungsvorrichtung zu wickeln. Zudem ist durch die Einstückigkeit die Zuführung der Fadenpaketabstützungsvorrichtung in eine Wickelmaschine erleichtert. Folglich ist der Einstell- und Überwachungsaufwand für die Wickelmaschine reduziert, so dass die Komplexität der Herstellung vereinfacht ist. Ferner ermöglicht die einstückige Ausbildung der Fadenpaketabstützungsvorrichtung die Verwendung einfacher und damit kostengünstiger Haltevorrichtungen und Werkzeuge während der Prozesskette, so dass der Maschineninvest und die artikelspezifischen Kosten reduziert sind. Dadurch ist eine wirtschaftliche Fertigung bereits bei kleinen Stückzahlen möglich.

In einer vorteilhaften Ausgestaltung ist der Steg abtrennbar von den Umlenkabschnitten. Durch das Abtrennen des Stegs können sich die beiden Umlenkabschnitte relativ zueinander bewegen, um so die für die Schwingungsisolierung und die akustische Entkoppelung der beiden Wellenabschnitte erforderliche Elastizität zu ermöglichen. Insbesondere wird der Steg von den Umlenkabschnitten abgetrennt, wenn das Fadenpaket vollständig auf die Fadenpaketabstützungsvorrichtung aufgewickelt ist, oder wenn das aufgewickelte Fadenpaket teilweise von einem Elastomerkörper ummantelt ist.

Jeder der Umlenkabschnitte kann wenigstens einen Auflagebereich zur Auflage der Fadenabstützungsvorrichtung zum Abtrennen des Stegs aufweisen. Der Auflagebereich gewährleistet ein prozesssicheres Ausstanzen des Stegs.

In einer vorteilhaften Ausgestaltung weist jeder der Umlenkabschnitte zwei gegenüberliegende Kragenabschnitte auf, die das Fadenpaket zwischen sich aufnehmen und axial abstützen. Die Kragenabschnitte verhindern ein Herunterrutschen des Fadenpakets von der Fadenpaketabstützungsvorrichtung, bevor diese mit einer elastischen Ummantelung versehen wird. Zudem gewährleisten die Kragenabschnitte eine Abstützung des Fadenpakets bei starken Belastungen während des Betriebs.

In einer vorteilhaften Ausgestaltung erweitert sich ein Abstand der gegenüberliegenden Kragenabschnitte im Bereich einer tangentialen Fadenführung stetig. Vorteilhaft erweitert sich ein Abstand der gegenüberliegenden Kragenabschnitte in den tangentialen Fadenführungsbereichen stetig. Dadurch kann das Fadenpaket hohe Knickwinkel realisieren. Insbesondere weisen die Kragenabschnitte in den tangentialen Fadenführungsbereichen einen trichterförmigen Öffnungswinkel auf. Vorteilhaft ist der Abstand zwischen den sich gegenüberliegenden Kragenabschnitten in den bogenförmigen Fadenführungsbereichen konstant. Dadurch weist das Fadenpaket in seinen bogenförmigen Fadenbereichen eine parallele Fadenführung auf, wodurch die freie Fadenlänge erhöht ist.

In einer vorteilhaften Ausgestaltung weist jeder Umlenkabschnitt einen bogenförmigen Fadenführungsbereich, um den ein bogenförmiger Fadenbereich geführt ist, und zwei tangentiale Fadenführungsbereiche aufweist, wobei an jeden der tangentialen Fadenführungsbereiche ein Abschnitt eines tangentialen Fadenbereichs führt.

Jeder der Umlenkabschnitte kann eine Durchgangsöffnung zum Einpressen einer Buchse und einen Wulstabschnitt zum Anbinden des Stegs aufweisen. Der Steg ist einstückig und materialeinheitlich mit den Wulstabschnitten verbunden. Insbesondere weist der Steg eine geringere vertikale Ausdehnung als die beiden Wulstabschnitte auf. Dadurch kann der Steg einfach von den beiden Wulstabschnitten abgetrennt werden. Darüber hinaus dienen die beiden Wulstabschnitte als Anschlag, wenn der Steg abgetrennt ist. Somit wirken die Wulstabschnitte bei starken Auslenkbewegungen als integrierter Überlastschutz. Über die Formgebung der Wulstabschnitte kann die Auslenkbewegung eingestellt werden. Vorteilhaft weisen die Wulstabschnitte eine große Kontaktfläche auf. Jeder der Wulstabschnitte kann einen Auflagebereich zur Auflage der Fadenpaketabstützungsvorrichtung zum Abtrennen des Stegs aufweisen.

Die Fadenpaketabstützungsvorrichtung kann einen Elastomerkörper aufweisen, der die Fadenpaketabstützungsvorrichtung teilweise ummantelt. Da die Fadenpaketabstützungsvorrichtung einstückig beziehungsweise einteilig ausgebildet ist, ist zur Ummantelung eine geringe Elastomermenge erforderlich. Darüber hinaus kann die Anzahl der Kavitäten in der Spritzgussform erhöht werden, da durch die einstückige Ausgestaltung eine verbesserte Ausnutzung der Spritzgusswerkzeugfläche ermöglicht wird. Aufgrund der geringeren Elastomermenge ist die Auftriebsfläche im Spritzgusswerkzeug und damit einhergehend die Auftriebskraft reduziert. Zudem ist kein funktionsunrelevantes Elastomer vorhanden, so dass die Heizzeit verkürzt werden kann.

Da die Umlenkabschnitte und der Steg einstückig im Spritzgussverfahren hergestellt sind, ermöglicht dies eine einfache und kostengünstige Herstellung der Fadenpaketabstützungsvorrichtung.

Die beiden Umlenkabschnitte und der Steg können aus einem Kunststoff, insbesondere einem faserverstärkten Kunststoff, hergestellt sein. Dadurch weist die Fadenpaketabstützungsvorrichtung ein geringes Gewicht auf. Gemäß einem weiteren Aspekt wird eine elastische Gelenkscheibe zum Verbinden zweier Wellenabschnitte vorgeschlagen. Die Gelenkscheibe umfasst eine Mehrzahl an Fadenpaketabstützungsvorrichtungen, eine Mehrzahl an Fadenpaketen und eine Mehrzahl an Buchsen, wobei jeweils ein Fadenpaket eine Fadenpaketabstützungsvorrichtung umschlingt, wobei jede mit einem Fadenpaket umschlungene Fadenpaketabstützungsvorrichtung wenigstens abschnittsweise von einem Elastomerkörper ummantelt ist, und wobei jeweils eine Buchse zwei Fadenpaketabstützungsvorrichtungen miteinander verbindet. Durch die Einstückigkeit ist die Fadenpaketabstützungsvorrichtung formstabil. Dadurch bleibt der Faden beim Aufwickeln auf die Fadenpaketabstützungsvorrichtung stets vorgespannt. Somit entfällt ein andauerndes Spannen und Entspannen des Fadens beziehungsweise des Fadenpakets während der jeweiligen Prozessschritte. Darüber hinaus ist es möglich, direkt auf die Fadenpaketabstützungsvorrichtung zu wickeln. Zudem ist die Zuführung der Fadenpaketabstützungsvorrichtung auf eine Wickelmaschine erleichtert. Demgemäß ist der Einstell- und Überwachungsaufwand für die Wickelmaschine reduziert, so dass die Komplexität der Herstellung vereinfacht ist. Ferner ermöglicht die einstückige Ausbildung der Fadenpaketabstützungsvorrichtung die Verwendung einfacher und damit kostengünstigerer Haltevorrichtungen und Werkzeuge während der Prozessschritte. Dies resultiert in einem reduzierten Maschineninvest und somit in geringeren artikelspezifischen Kosten. Dadurch ist eine wirtschaftliche Fertigung bereits bei kleinen Stückzahlen möglich. Zudem ist zur Ummantelung nur eine geringe Elastomermenge erforderlich. Darüber hinaus kann die Anzahl der Kavitäten in der Spritzguss form erhöht werden, da durch die einstückige Ausgestaltung eine verbesserte Ausnutzung der Spritzgusswerkzeugfläche ermöglicht wird. Aufgrund der geringeren Elastomermenge ist die Auftriebsfläche im Spritzgusswerkzeug und damit einhergehend die Auftriebskraft reduziert. Zudem ist kein funktionsunrelevantes Elastomer vorhanden, so dass die Heizzeit verkürzt werden kann.

Gemäß einem weiteren Aspekt wird ein Verfahren zur Herstellung einer elastischen Gelenkscheibe zum Verbinden zweier Wellenabschnitte vorgeschlagen, das folgende Verfahrensschritte umfasst. Zunächst wird eine Mehrzahl an Fadenpaketabstützungsvorrichtungen bereitgestellt, wobei jede Fadenpaketabstützungsvorrichtung zwei Umlenkabschnitte und einen die beiden Umlenkabschnitte einstückig miteinander verbindenden Steg aufweist, wobei die Umlenkabschnitte und der Steg einstückig im Spritzgussverfahren hergestellt sind und wobei jeder Umlenkabschnitt eine Durchgangsöffnung zum Einpressen einer Buchse aufweist. Anschließend wird jede der Fadenpaketabstützungsvorrichtungen mit einem Faden umwickelt, um auf jeder der Fadenpaketabstützungsvorrichtungen ein Fadenpaket zu erzeugen. Danach wird jede der Fadenpaketabstützungsvorrichtungen teilweise mit einem Elastomerkörper ummantelt. Abschließend werden die mit einem Elastomerkörper ummantelten Fadenpaketabstützungsvorrichtungen mittels einer Mehrzahl an Buchsen zu einer Gelenkscheibe verbunden, indem jeweils eine Buchse in die Durchgangsöffnungen zweier Fadenpaketabstützungsvorrichtungen eingepresst wird.

Gemäß einem weiteren Aspekt wird ein Verfahren zur Herstellung einer elastischen Gelenkscheibe zum Verbinden zweier Wellenabschnitte vorgeschlagen, das folgende Verfahrensschritte umfasst. Zuerst wird eine Mehrzahl an Fadenpaketabstützungsvorrichtungen bereitgestellt, wobei jede Fadenpaketabstützungsvorrichtung zwei Umlenkabschnitte und einen die beiden Umlenkabschnitte einstückig miteinander verbindenden Steg aufweist, wobei die Umlenkabschnitte und der Steg einstückig im Spritzgussverfahren hergestellt sind und wobei jeder Umlenkabschnitt eine Durchgangsöffnung zum Einpressen einer Buchse aufweist. Anschließend wird jede der Fadenpaketabstützungsvorrichtungen mit einem Faden umwickelt, um auf jeder der Fadenpaketabstützungsvorrichtungen ein Fadenpaket zu erzeugen. Danach werden die Fadenpaketabstützungsvorrichtungen mittels einer Mehrzahl an Buchsen zu einem Gelenkscheibengrundkörper verbunden, indem jeweils eine Buchse in die Durchgangsöffnungen zweier Fadenpaketabstützungsvorrichtungen eingepresst wird. Abschließend wird jede der Fadenpaketabstützungsvorrichtungen teilweise mit einem Elastomerkörper ummantelt.

In einer vorteilhaften Ausgestaltung wird der Steg von den Umlenkabschnitten abgetrennt, nachdem jede der Fadenpaketabstützungsvorrichtungen mit einem Elastomerkörper teilweise ummantelt worden ist.

In einer vorteilhaften Ausgestaltung werden vor dem Umwickeln jeder Fadenpaketabstützungsvorrichtung mit einem Faden die Fadenpaketabstützungsvorrichtungen beschichtet.

Nachfolgend wird die Fadenpaketabstützungsvorrichtung, die Gelenkscheibe, die Verfahren zur Herstellung einer Gelenkscheibe sowie weitere Merkmale und Vorteile anhand eines Ausführungsbeispiels näher erläutert, das in den Figuren schematisch dargestellt ist. Hierbei zeigen:
- Fig. 1: eine perspektivische Ansicht einer elastischen Gelenkscheibe;
- Fig. 2: eine perspektivische Ansicht einer Fadenpaketabstützungsvorrichtung;
- Fig. 3: eine Draufsicht auf die in Fig. 2 gezeigte Fadenpaketabstützungsvorrichtung;
- Fig. 4: eine Seitenansicht der in Fig. 2 gezeigten Fadenpaketabstützungsvorrichtung;
- Fig. 5: eine perspektivische Darstellung der in Fig. 2 gezeigten Fadenpaketabstützungsvorrichtung mit einem Fadenpaket;
- Fig. 6: eine perspektivische Ansicht der in Fig. 5 gezeigten Fadenpaketabstützungsvorrichtung mit einem Elastomerkörper; und
- Fig. 7: eine perspektivische Ansicht der in Fig. 6 gezeigten Fadenpaketabstützungsvorrichtung mit einem abgetrennten Steg.

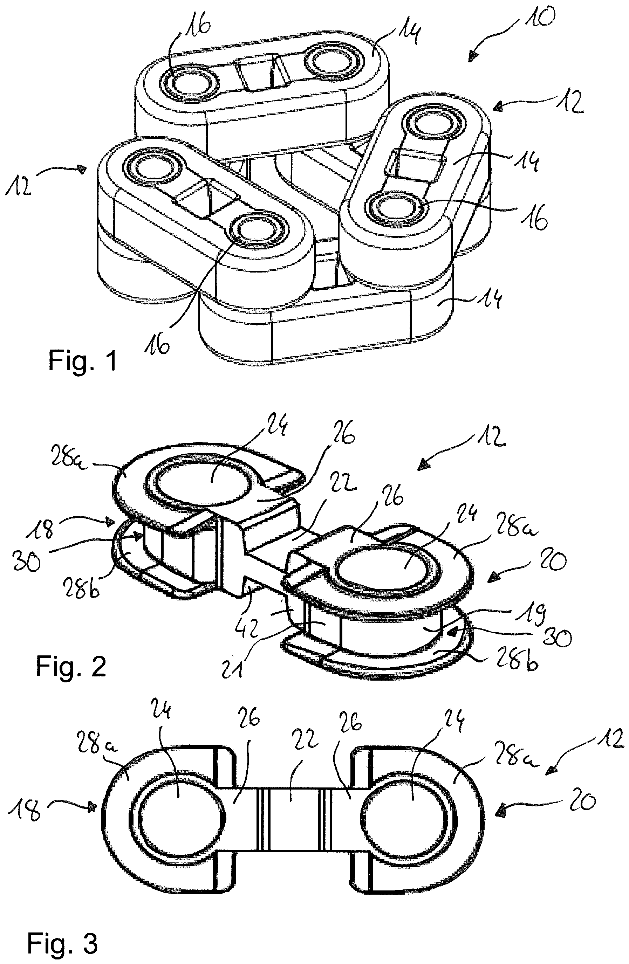

In Fig. 1 ist eine elastische Gelenkscheibe 10 gezeigt, die zum Verbinden zweier nicht dargestellter Wellenabschnitte einer Gelenkwelle eines Kraftfahrzeugs dient.

Die Gelenkscheibe 10 weist eine Mehrzahl an Fadenpaketabstützungsvorrichtungen 12, die teilweise von einem Elastomerkörper 14 ummantelt sind, und eine Mehrzahl an Buchsen 16 auf, die jeweils zwei Fadenpaketabstützungsvorrichtungen 12 miteinander verbinden.

Wie in den Figuren 2 bis 4 ersichtlich ist, weist die Fadenpaketabstützungsvorrichtung 12 einen ersten Umlenkabschnitt 18 und einen zweiten Umlenkabschnitt 20 auf, die über einen Steg 22 einstückig miteinander verbunden sind. Die Fadenpaketabstützungsvorrichtung 12 ist einstückig im Spritzgussverfahren aus einem Kunststoff, insbesondere einem faserverstärkten Kunststoff, hergestellt.

Jeder der Umlenkabschnitte 18, 20 umfasst einen bogenförmigen Fadenführungsbereich 19, zwei tangentiale Fadenführungsbereiche 21, eine Durchgangsöffnung 24 zum Einpressen eines Abschnitts einer Buchse 16 und einen Wulstabschnitt 26, an den der Steg 22 angebunden ist. Ferner weist jeder der Umlenkabschnitte 18, 20 zwei sich gegenüberliegende Kragenabschnitte 28a, 28b auf, die radial nach außen von den Umlenkabschnitten 18, 20 abragen und zwischen sich einen Führungsbereich 30 definieren.

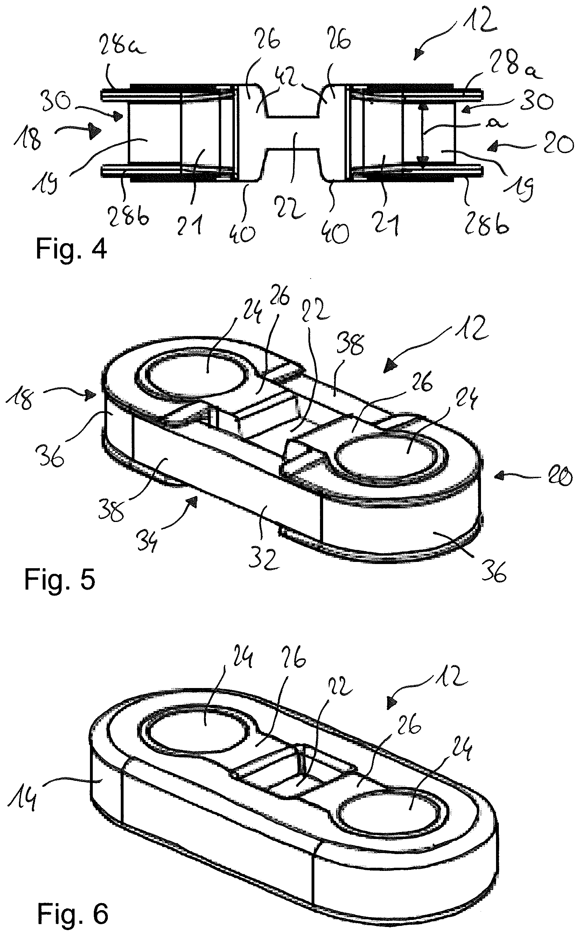

Gemäß Figur 5 wird die Fadenpaketabstützungsvorrichtung 12 mit einem Faden 32 umwickelt, um ein Fadenpaket 34 zu erzeugen, wobei das Fadenpaket 34 innerhalb des durch die Kragenabschnitte 28a, 28b definierten Führungsbereichs 30 geführt ist. Die beiden Kragenabschnitte 28a, 28b verhindern somit ein Herunterrutschen des Fadenpakets 34 von der Fadenpaketabstützungsvorrichtung 12.

Das Fadenpaket 34 weist zwei gegenüberliegende bogenförmige Fadenbereiche 36 und zwei die bogenförmigen Fadenbereiche 36 miteinander verbindende und parallel verlaufende tangentiale Fadenbereiche 38 auf. Der bogenförmige Fadenbereich 36 ist dabei um den bogenförmigen Fadenführungsbereich 19 geführt und jeweils ein Abschnitt eines der tangentialen Fadenbereiche 38 liegt an einem der tangentialen Fadenführungsbereiche 21 an.

Wie insbesondere in den Figuren 4 und 5 ersichtlich ist, erweitert sich in den tangentialen Fadenführungsbereichen 21 ein Abstand a zwischen den gegenüberliegenden Kragenabschnitten 28a, 28b stetig. Insbesondere bilden die beiden Kragenabschnitte 28a, 28b einen trichterförmigen Öffnungswinkel für den tangentialen Fadenbereich 38.

In den bogenförmigen Fadenführungsbereichen 19 ist der Abstand a der Kragenabschnitte 28a, 28b konstant. Dadurch ist die freie Fadenlänge in dem bogenförmigen Fadenbereich 36 erhöht.

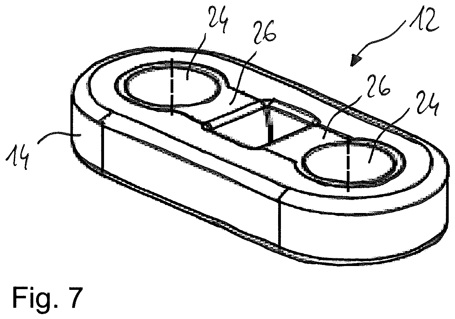

Der Steg 22 weist eine im Vergleich zu den beiden Wulstabschnitten 26 geringere axiale Ausdehnung auf und ist von den beiden Wulstabschnitten 26 abtrennbar, insbesondere ausstanzbar. Das Abtrennen beziehungsweise Ausstanzen des Stegs 22 erfolgt dann, wenn die Fadenpaketabstützungsvorrichtung 12 teilweise von dem Elastomerkörper 14 ummantelt ist. In Fig. 7 ist eine Fadenpaketabstützungsvorrichtung 12 mit abgetrenntem Steg 22 gezeigt.

Zum Abtrennen des Stegs 22 weisen die Wulstabschnitte 26 einen Auflagebereich 40 zur Auflage der Fadenpaketabstützungsvorrichtung 12 auf. Die Fadenpaketabstützungsvorrichtung 12 wird dazu in eine nicht dargestellte Ausstanzvorrichtung derart eingebracht, dass sich die Fadenpaketabstützungsvorrichtung 12 auf ihrem Auflagebereich 40 abstützt.

Durch das Abtrennen des Stegs 22 lassen sich die beiden Umlenkabschnitte 18, 20 relativ zueinander bewegen. Durch die trichterförmigen Öffnungswinkel können hohe Knickwinkel, insbesondere im Bereich der tangentialen Fadenbereiche 38, realisiert werden. Darüber hinaus wirken die Wulstabschnitte 26 bei abgetrenntem Steg 22 als Anschläge 42 bei starken Auslenkbewegungen. Über die Formgebung der Wulstabschnitte 26 kann die Auslenkbewegung eingestellt werden.

Im Folgenden wird ein mögliches Verfahren zum Herstellen der Gelenkscheibe 10 erläutert. Hierzu werden zunächst sechs Fadenpaketabstützungsvorrichtungen 12 bereitgestellt und vorbehandelt, insbesondere beschichtet. Danach wird jede Fadenpaketabstützungsvorrichtung 12 separat in eine nicht dargestellte Wickelmaschine eingesetzt wird. Anschließend wird jede Fadenpaketabstützungsvorrichtung 12 mit einem Faden 32 in der Wickelmaschine umwickelt, um ein Fadenpaket 34 zu erzeugen, wie dies in Fig. 5 dargestellt ist. Anschließend werden die Fadenpaketabstützungsvorrichtungen 12 samt Fadenpaket 34 in eine Vulkanisationsform eingelegt und teilweise mit einem Elastomermaterial umspritzt und anschließend vulkanisiert, um den Elastomerkörper 14 zu erzeugen, wie dies in Fig. 6 dargestellt ist. Danach werden die teilweise mit dem Elastomerkörper 14 ummantelten Fadenpaketabstützungsvorrichtungen 12 abgekühlt. Anschließend wird der Steg 22 abgetrennt, insbesondere ausgestanzt. Hierzu werden die Fadenpaketabstützungsvorrichtung 12 in eine nicht dargestellte Ausstanzvorrichtung derart eingelegt, dass sich die Fadenpaketabstützungsvorrichtungen 12 auf ihren Auflagebereichen 40 abstützen. Danach werden die Fadenpaketabstützungsvorrichtungen derart positioniert, wie dies in Fig. 1 dargestellt ist, so dass die Durchgangsöffnungen 24 zweier übereinanderliegender Fadenpaketabstützungsvorrichtungen 12 fluchten. Schließlich werden die Buchsen 16 in die Durchgangsöffnungen 24 eingepresst, um die Fadenpaketabstützungsvorrichtungen 12 miteinander zu der Gelenkscheibe 10 zu verbinden.

Ferner kann das zuvor beschriebene Verfahren zur Herstellung der Gummigelenkscheibe auch dahingehend abgewandelt werden, dass die mit dem Fadenpaket 34 umwickelten Fadenpaketabstützungsvorrichtungen 12 zuerst mittels der Buchsen 16 zu einem Gelenkscheibengrundkörper verbunden werden, und anschließend wird der Gelenkscheibengrundkörper in eine Vulkanisationsform eingelegt, um die einzelnen Fadenpaketabstützungsvorrichtungen 12 teilweise mit dem Elastomerkörper 14 zu ummanteln. Zuletzt werden dann die Stege 22 abgetrennt, insbesondere ausgestanzt.

### Bezugszeichenliste

- 10: Gelenkscheibe
- 12: Fadenpaketabstützungsvorrichtung
- 14: Elastomerkörper
- 16: Buchse
- 18: erster Umlenkabschnitt
- 19: bogenförmiger Fadenführungsbereich
- 20: zweiter Umlenkabschnitt
- 21: tangentialer Fadenführungsbereich
- 22: Steg
- 24: Durchgangsöffnung
- 26: Wulstabschnitt
- 28a: Kragenabschnitt
- 28b: Kragenabschnitt
- 30: Führungsbereich
- 32: Faden
- 34: Fadenpaket
- 36: bogenförmiger Fadenbereich
- 38: tangentialer Fadenbereich
- 40: Auflagebereich
- 42: Anschlag

- a: Abstand

## Patentansprüche

1. Fadenpaketabstützungsvorrichtung (12) zum Abstützen eines mit einem Faden (32) gewickelten Fadenpakets (34) für eine elastische Gelenkscheibe (10) zum Verbinden zweier Wellenabschnitte, wobei das Fadenpaket (34) zwei gegenüberliegende bogenförmige Fadenbereiche (36) und zwei die bogenförmigen Fadenbereiche (36) miteinander verbindende und parallel verlaufende tangentiale Fadenbereiche (38) aufweist, wobei die Fadenpaketabstützungsvorrichtung (12) einen ersten Umlenkabschnitt (18) und einen zweiten Umlenkabschnitt (20) aufweist, um die jeweils ein bogenförmiger Fadenbereich (36) des Fadenpakets (34) geführt ist, wobei die beiden Umlenkabschnitte (18, 20) über einen Steg (22) einstückig miteinander verbunden sind und **dadurch gekennzeichnet, dass** die Umlenkabschnitte (18, 20) und der Steg (22) einstückig im Spritzgussverfahren hergestellt sind.

2. Fadenpaketabstützungsvorrichtung (12) nach Anspruch 1 **dadurch gekennzeichnet, dass** jeder der Umlenkabschnitte (18, 20) wenigstens einen Auflagebereich (40) zur Auflage der Fadenpaketabstützungsvorrichtung (12) zum Abtrennen des Stegs (22) aufweist.

3. Fadenpaketabstützungsvorrichtung (12) nach einem der vorhergehenden Ansprüche, **dadurch gekennzeichnet, dass** jeder der Umlenkabschnitte (18, 20) zwei gegenüberliegende Kragenabschnitte (28a, 28b) aufweist, die das Fadenpaket (34) zwischen sich aufnehmen und axial abstützen.

4. Fadenpaketabstützungsvorrichtung (12) nach Anspruch 3 **dadurch gekennzeichnet, dass** sich ein Abstand zwischen den gegenüberliegenden Kragenabschnitten (28a, 28b) im Bereich einer tangentialen Fadenführung stetig erweitert.

5. Fadenpaketabstützungsvorrichtung nach einem der vorhergehenden Ansprüche, **dadurch gekennzeichnet, dass** jeder Umlenkabschnitt (18, 20) einen bogenförmigen Fadenführungsbereich (19), um den ein bogenförmiger Fadenbereich (36) geführt ist, und zwei tangentiale Fadenführungsbereiche (21) aufweist, wobei jeder der tangentialen Fadenführungsbereiche (21) einen Abschnitt eines tangentialen Fadenbereichs (38) führt.

6. Fadenpaketabstützungsvorrichtung (12) nach einem der vorhergehenden Ansprüche, **dadurch gekennzeichnet, dass** jeder der Umlenkabschnitte (18, 20) eine Durchgangsöffnung (24) zum Einpressen einer Buchse (16) und einen Wulstabschnitt (26) zum Anbinden des Stegs (22) aufweist.

7. Fadenpaketabstützungsvorrichtung (12) nach einem der vorhergehenden Ansprüche, **gekennzeichnet durch** einen Elastomerkörper (14), der die Fadenpaketabstützungsvorrichtung (12) teilweise ummantelt.

8. Fadenpaketabstützungsvorrichtung (12) nach einem der vorhergehenden Ansprüche, **dadurch gekennzeichnet, dass** die beiden Umlenkabschnitte (18, 20) und der Steg (22) aus einem Kunststoff, insbesondere einem faserverstärktem Kunststoff, hergestellt sind.

9. Elastische Gelenkscheibe (10) zum Verbinden zweier Wellenabschnitte aufweisend eine Mehrzahl an Fadenpaketabstützungsvorrichtungen (12) nach einem der Ansprüche 1 bis 9, eine Mehrzahl an Fadenpaketen (34) und eine Mehrzahl an Buchsen (16), wobei jeweils ein Fadenpaket (34) eine Fadenpaketabstützungsvorrichtung (12) umschlingt, wobei jede mit einem Fadenpaket (34) umschlungene Fadenpaketabstützungsvorrichtung (12) wenigstens teilweise von einem Elastomerkörper (14) ummantelt ist, und wobei jeweils eine Buchse (16) zwei Fadenpaketabstützungsvorrichtungen (12) miteinander verbindet.

10. Verfahren zur Herstellung einer elastischen Gelenkscheibe (10) zum Verbinden zweier Wellenabschnitte, das folgende Verfahrensschritte umfasst:
a. Bereitstellen einer Mehrzahl an Fadenpaketabstützungsvorrichtungen (12), wobei jede Fadenpaketabstützungsvorrichtung (12) zwei Umlenkabschnitte (18, 20) und einen die beiden Umlenkabschnitte (18, 20) einstückig miteinander verbindenden Steg (22) aufweist, wobei die Umlenkabschnitte (18, 20) und der Steg (22) einstückig im Spritzgussverfahren hergestellt sind, und wobei jeder Umlenkabschnitt (18, 20) eine Durchgangsöffnung (24) zum Einpressen einer Buchse (16) aufweist;
b. Umwickeln jeder der Fadenpaketabstützungsvorrichtungen (12) mit einem Faden (32), um auf jeder der Fadenpaketabstützungsvorrichtungen (12) ein Fadenpaket (34) zu erzeugen;
c. Teilweises Ummanteln jeder der Fadenpaketabstützungsvorrichtungen (12) mit einem Elastomerkörper (14); und
d. Verbinden der teilweise mit einem Elastomerkörper (14) ummantelten Fadenpaketabstützungsvorrichtungen (12) mittels einer Mehrzahl an Buchsen (16) zu einer Gelenkscheibe (10), indem jeweils eine Buchse (16) in die Durchgangsöffnungen (24) zweier Fadenpaketabstützungsvorrichtungen (12) eingepresst wird.

11. Verfahren zur Herstellung einer elastischen Gelenkscheibe (10) zum Verbinden zweier Wellenabschnitte, das folgende Verfahrensschritte umfasst:
a. Bereitstellen einer Mehrzahl an Fadenpaketabstützungsvorrichtungen (12), wobei jede Fadenpaketabstützungsvorrichtung (12) zwei Umlenkabschnitte (18, 20) und einen die beiden Umlenkabschnitte (18, 20) einstückig miteinander verbindenden Steg (22) aufweist, wobei die Umlenkabschnitte (18, 20) und der Steg (22) einstückig im Spritzgussverfahren hergestellt sind, und wobei jeder Umlenkabschnitt (18, 20) eine Durchgangsöffnung (24) zum Einpressen einer Buchse (16) aufweist;
b. Umwickeln jeder der Fadenpaketabstützungsvorrichtungen (12) mit einem Faden (32), um auf jeder der Fadenpaketabstützungsvorrichtungen (12) ein Fadenpaket (34) zu erzeugen;
c. Verbinden der Fadenpaketabstützungsvorrichtungen (12) mittels einer Mehrzahl an Buchsen (16) zu einem Gelenkscheibengrundkörper, indem jeweils eine Buchse (16) in die Durchgangsöffnungen (24) zweier Fadenpaketabstützungsvorrichtungen (12) eingepresst wird; und
d. Teilweises Ummanteln jeder der Fadenpaketabstützungsvorrichtungen (12) mit einem Elastomerkörper (14).

12. Verfahren nach Anspruch 10 oder 11 **dadurch gekennzeichnet, dass** der Steg (22) von den Umlenkabschnitten (18, 20) abgetrennt wird, nachdem jede der Fadenpaketabstützungsvorrichtungen (12) teilweise mit einem Elastomerkörper (14) ummantelt worden ist.

13. Verfahren nach einem der Ansprüche 10 bis 12 **dadurch gekennzeichnet, dass** vor dem Schritt b) die Fadenpaketabstützungsvorrichtungen (12) beschichtet werden.

## Claims

1. Thread package supporting device (12) for supporting a thread package (34), wound with a thread (32), for an elastic joint disc (10) for connecting two shaft sections, wherein the thread package (34) has two opposite arcuate thread regions (36) and two tangential thread regions (38) that connect the arcuate thread regions (36) together and extend parallel to one another, wherein the thread package supporting device (12) has a first deflection portion (18) and a second deflection portion (20), about which in each case one arcuate thread region (36) of the thread package (34) is guided, wherein the two deflection portions (18, 20) are connected integrally together via a web (22) and **characterised in that** the deflection portions (18, 20) and the web (22) are produced as one piece by injection moulding.

2. Thread package supporting device (12) according to claim 1 **characterised in that** each of the deflection portions (18, 20) has at least one bearing region (40) for bearing the thread package supporting device (12) for separating the web (22).

3. Thread package supporting device (12) according to any of the preceding claims, **characterised in that** each of the deflection portions (18, 20) has two opposite collar sections (28a, 28b), which hold and axially support the thread package (34) between them.

4. Thread package supporting device (12) according to claim 3, **characterised in that** a gap between the opposite collar sections (28a, 28b) is continuously expanded in the region of a tangential thread guide.

5. Thread package supporting device according to any of the preceding claims **characterised in that** each of the deflection portions (18, 20) has an arcuate thread guide region (19), about which an arcuate thread region (36) is guided, and two tangential thread guide regions (21), wherein each of the tangential thread guide regions (21) guides a section of a tangential thread region (38).

6. Thread package supporting device (12) according to any of the preceding claims **characterised in that** each of the deflection portions (18, 20) has a through opening (24) for press-fitting a liner (16) and a bead section (26) for retaining the web (22).

7. Thread package supporting device (12) according to any of the preceding claims **characterised by** an elastomeric body (14), which partially encases the thread package supporting device (12).

8. Thread package supporting device (12) according to any of the preceding claims **characterised in that** the two deflection portions (18, 20) and the web (22) are made from a plastic, in particular a fibre-reinforced plastic.

9. Elastic joint disc (10) for connecting two shaft sections having a plurality of thread package supporting devices (12) according to any of claims 1 to 9, a plurality of thread packages (34) and a plurality of liners (16), wherein in each case a thread package (34) encircles a thread package supporting device (12), wherein each thread package supporting device (12) encircled by a thread package (34) is at least partially encased by an elastomeric body (14), and wherein in each case a liner (16) connects two thread package supporting devices (12) together.

10. Method for producing an elastic joint disc (10) for connecting two shaft sections, comprising the following method steps:
a. Providing a plurality of thread package supporting devices (12), wherein each thread package supporting device (12) has two deflection portions (18, 20) and a web (22) integrally connecting the two deflection portions (18, 20) together, wherein the deflection portions (18, 20) and the web (22) are produced as one piece by injection moulding, and wherein each deflection portion (18, 20) has a through opening (24) for press-fitting a liner (16),
b. Winding a thread (32) around each of the thread package supporting devices (12), in order to create a thread package (34) on each of the thread package supporting devices (12),
c. Partially encasing each of the thread package supporting devices (12) with an elastomeric body (14) and
d. Connecting the thread package supporting devices (12) partially encased by an elastomeric body (14) by means of a plurality of liners (16) to a joint disc (10), in each case by press-fitting a liner (16) in the through openings (24) of two thread package supporting devices (12).

11. Method for producing an elastic joint disc (10) for connecting two shaft sections, comprising the following method steps:
a) Providing a plurality of thread package supporting devices (12), wherein each thread package supporting device (12) has two deflection portions (18, 20) and a web (22) integrally connecting the two deflection portions (18, 20) together, wherein the deflection portions (18, 20) and the web (22) are produced as one piece by injection moulding, and wherein each deflection portion (18, 20) has a through opening (24) for press-fitting a liner (16),
b) Winding a thread (32) around each of the thread package supporting devices (12), in order to create a thread package (34) on each of the thread package supporting devices (12),
c) Connecting the thread package supporting devices (12) by means of a plurality of liners (16) to a main joint disc body, in each case by press-fitting a liner (16) in the through openings (24) of two thread package supporting devices (12) and
d) Partially encasing each of the thread package supporting devices (12) with an elastomeric body (14).

12. Method according to claim 10 or 11, **characterised in that** the web (22) is separated from the deflection portions (18, 20), after each of the thread package supporting devices (12) has been partially encased with an elastomeric body (14).

13. Method according to any of claims 10 to 12 **characterised in that** the thread package supporting devices (12) are coated before step b).

## Revendications

1. Dispositif de support de faisceau de fils (12) pour supporter un faisceau de fils (34) bobiné avec un fil (32) pour un joint élastique à déformation (10) pour relier deux sections d'arbre, dans lequel le faisceau de fils (34) présente deux zones de fil arquées (36) opposées et deux zones de fil tangentielles (38) s'étendant parallèlement et reliant l'une à l'autre les zones de fil arquées (36), dans lequel le dispositif de support de faisceau de fils (12) présente une première section de renvoi (18) et une deuxième section de renvoi (20), autour desquelles respectivement une zone de fil arquée (36) du faisceau de fils (34) est guidée, dans lequel les deux sections de renvoi (18, 20) sont reliées l'une à l'autre d'un seul tenant via une passerelle (22) et **caractérisé en ce que** les sections de renvoi (18, 20) et la passerelle (22) sont fabriquées d'un seul tenant dans le procédé de moulage par injection.

2. Dispositif de support de faisceau de fils (12) selon la revendication 1 **caractérisé en ce que** chacune des sections de renvoi (18, 20) présente au moins une zone d'appui (40) pour l'appui du dispositif de support de faisceau de fils (12) pour la séparation de la passerelle (22).

3. Dispositif de support de faisceau de fils (12) selon l'une quelconque des revendications précédentes, **caractérisé en ce que** chacune des sections de renvoi (18, 20) présente deux sections de col (28a, 28b) opposées, qui reçoivent entre elles et supportent axialement le faisceau de fils (34).

4. Dispositif de support de faisceau de fils (12) selon la revendication 3 **caractérisé en ce qu'**une distance s'élargit en continu entre les sections de col (28a, 28b) opposées dans la zone d'un guide-fil tangentiel.

5. Dispositif de support de faisceau de fils selon l'une quelconque des revendications précédentes, **caractérisé en ce que** chaque section de renvoi (18, 20) présente une zone guide-fil arquée (19), autour de laquelle une zone de fil arquée (36) est guidée, et deux zones guide-fil tangentielles (21), dans lequel chacune des zones guide-fil tangentielles (21) guide une section d'une zone de fil tangentielle (38).

6. Dispositif de support de faisceau de fils (12) selon l'une quelconque des revendications précédentes, **caractérisé en ce que** chacune des sections de renvoi (18, 20) présente une ouverture de passage (24) pour presser une douille (16) et une section de talon (26) pour attacher la passerelle (22).

7. Dispositif de support de faisceau de fils (12) selon l'une quelconque des revendications précédentes, **caractérisé par** un corps élastomère (14), qui enveloppe partiellement le dispositif de support de faisceau de fils (12).

8. Dispositif de support de faisceau de fils (12) selon l'une quelconque des revendications précédentes, **caractérisé en ce que** les deux sections de renvoi (18, 20) et la passerelle (22) sont fabriquées en un plastique, en particulier un plastique renforcé de fibres.

9. Joint élastique à déformation (10) pour relier deux sections d'arbre présentant une pluralité de dispositifs de support de faisceau de fils (12) selon l'une quelconque des revendications 1 à 9, une pluralité de faisceaux de fils (34) et une pluralité de douilles (16), dans lequel respectivement un faisceau de fils (34) s'enroule autour d'un dispositif de support de faisceau de fils (12), dans lequel chaque dispositif de support de faisceau de fils (12) enroulé avec un faisceau de fils (34) est enveloppé au moins en partie par un corps élastomère (14), et dans lequel respectivement une douille (16) relie l'un à l'autre deux dispositifs de support de faisceau de fils (12).

10. Procédé de fabrication d'un joint élastique à déformation (10) pour relier deux sections d'arbre, qui comprend les étapes de procédé suivantes :
a. mise à disposition d'une pluralité de dispositifs de support de faisceau de fils (12), dans lequel chaque dispositif de support de faisceau de fils (12) présente deux sections de renvoi (18, 20) et une passerelle (22) reliant l'une à l'autre d'un seul tenant les deux sections de renvoi (18, 20), dans lequel les sections de renvoi (18, 20) et la passerelle (22) sont fabriquées d'un seul tenant dans le procédé de moulage par injection, et dans lequel chaque section de renvoi (18, 20) présente une ouverture de passage (24) pour presser une douille (16) ;
b. bobinage de chacun des dispositifs de support de faisceau de fils (12) avec un fil (32) pour générer un faisceau de fils (34) sur chacun des dispositifs de support de faisceau de fils (12) ;
c. enveloppement partiel de chacun des dispositifs de support de faisceau de fils (12) avec un corps élastomère (14) ; et
d. liaison des dispositifs de support de faisceau de fils (12) enveloppés partiellement avec un corps élastomère (14) au moyen d'une pluralité de douilles (16) en un joint à déformation (10), par le fait que respectivement une douille (16) est pressée dans les ouvertures de passage (24) de deux dispositifs de support de faisceau de fils (12).

11. Procédé de fabrication d'un joint élastique à déformation (10) pour relier deux sections d'arbre, qui comprend les étapes de procédé suivantes :
a. mise à disposition d'une pluralité de dispositifs de support de faisceau de fils (12), dans lequel chaque dispositif de support de faisceau de fils (12) présente deux sections de renvoi (18, 20) et une passerelle (22) reliant l'une à l'autre d'un seul tenant les deux sections de renvoi (18, 20), dans lequel les sections de renvoi (18, 20) et la passerelle (22) sont fabriquées d'un seul tenant dans le procédé de moulage par injection, et dans lequel chaque section de renvoi (18, 20) présente une ouverture de passage (24) pour presser une douille (16) ;
b. bobinage de chacun des dispositifs de support de faisceau de fils (12) avec un fil (32) pour générer un faisceau de fils (34) sur chacun des dispositifs de support de faisceau de fils (12) ;
c. liaison des dispositifs de support de faisceau de fils (12) au moyen d'une pluralité de douilles (16) en un corps de base de joint à déformation, par le fait que respectivement une douille (16) est pressée dans les ouvertures de passage (24) de deux dispositifs de support de faisceau de fils (12) ; et
d. enveloppement partiel de chacun des dispositifs de support de faisceau de fils (12) avec un corps élastomère (14).

12. Procédé selon la revendication 10 ou 11 **caractérisé en ce que** la passerelle (22) est séparée des sections de renvoi (18, 20), après que chacun des dispositifs de support de faisceau de fils (12) a été enveloppé partiellement avec un corps élastomère (14).

13. Procédé selon l'une quelconque des revendications 10 à 12 **caractérisé en ce que** avant l'étape b) les dispositifs de support de faisceau de fils (12) sont revêtus.
